# EUROPÄISCHE PATENTSCHRIFT

(11) **EP 1 237 251 B1**
(45) Veröffentlichungstag und Bekanntmachung des Hinweises auf die Patenterteilung: **05.12.2018**
(21) Anmeldenummer: 02100143.3
(22) Anmeldetag: 19.02.2002
(51) Int. Cl.: H02J 13/00, G06F 11/20, G06F 13/40, H04L 5/16, H04L 12/40, H04L 12/46, G06F 11/07

(54) **Datenaustausch in einem Datenbus**
Data exchange in a databus
Echange de données dans un bus de données

(30) Priorität: 02.03.2001 DE 10110267
(43) Veröffentlichungstag der Anmeldung: 04.09.2002
(73) Patentinhaber: Continental Automotive GmbH, 30165 Hannover (DE)
(72) Erfinder: Goss, Stefan, 93047, Regensburg (DE); Kucera, Markus, 93059, Regensburg (DE)

(56) Entgegenhaltungen:
- EP-A1- 0 732 654
- EP-A2- 1 109 348
- DE-A1- 19 616 753
- DE-A1- 19 805 464
- DE-A1- 19 938 900
- DE-C1- 19 603 221
- US-A- 4 527 237
- US-A- 5 999 389

## Beschreibung

Die Erfindung betrifft ein Verfahren zum Datenaustausch auf einem Datenbus und einen Datenbus mit wenigstens zwei voneinander entkoppelten Buszweigen, insbesondere für die Kraftfahrzeugtechnik.

In der Kraftfahrzeugtechnik halten zunehmend Datenbusse Einzug. Im Falle eines Kurzschlusses einer Busleitung oder des Kontakts mit einem anderen Potential (Fremdschluss) kann es zu einem Totalausfall der Kommunikation kommen. Auch kann ein defekter Busteilnehmer den Datenaustausch zum Erliegen bringen, wenn er die Busleitung permanent auf ein bestimmtes Potential setzt. Dies ist insbesondere für sicherheitsrelevante Anwendungen in einem Kraftfahrzeug problematisch.

Aus der Offenlegungsschrift DE 195 15 194 A1 ist ein Kommunikationsnetzwerk für ein Fahrzeug bekannt, bei dem ein irrtümlicher Betrieb von Steuereinrichtungen verhindert werden soll. Hierzu wird eine Vielzahl von Steuereinrichtungen mit Busschienen verbunden. Die Busschienen können über eine Schalteinrichtung miteinander verbunden werden und voneinander getrennt werden, so dass die Steuereinrichtungen in Gruppen auftrennbar sind, die unterschiedliche Kommunikationsverfahren anwenden. Es ist allerdings kein Schutz vor einem Defekt einer Busleitung vorgesehen.

Die Patentschrift EP 0 412 085 B1 betrifft eine Netzwerkschnittstelle, bei der eine Unterbrechung oder ein Kurzschluss einer mit der Netzwerkschnittstelle verbundenen Busleitung selbst dann erkannt werden kann, wenn sich die Netzwerkschnittstelle in einem inaktiviertem Betriebsmodus ("sleep mode") befindet.

EP 1 109 348 A2 zeigt zwei Bussysteme, welche mit einer Kopplungseinheit verbunden sind. Die Kopplungseinheit enthält einen Unterbrecher, der die beiden Bussysteme galvanisch voneinander trennen kann, wenn einer der Busse eine Störung aufweist. So kann eine Beeinträchtigung des zweiten Bussystems verhindert werden.

DE 199 38 900 C2 zeigt ein Kommunikationsverfahren für ein Datenbus, wobei eine Trennschalter-Logik einen Fremd- oder Kurzschluß der Busleitung erkennt und durch einen Trennschalter die Busleitung in zwei Buszweige auftrennt. Tritt ein Defekt in einem der Buszweige auf, kann der andere Zweig weiterbetrieben werden. Die getrennten Buszweige können wieder zusammengeschaltet werden, wenn auf den jeweiligen Buszweigen über einen definierten Zeitabschnitt keine Störung mehr erkannt wurde. Es ist ein Ziel der Erfindung, ein Verfahren zum Datenaustausch auf einem Datenbus und einen Datenbus bereitzustellen, die eine wenigstens teilweise Aufrechterhaltung des Datenaustauschs erlauben, selbst wenn eine Störung auf einer Busleitung aufgetreten ist.

Dieses Ziel wird mit einem Verfahren und einem Datenbus erreicht, wie sie in den unabhängigen Patentansprüchen 1 und 9 definiert sind.

Vorteilhafte Weiterbildungen der Erfindung sind in den Unteransprüchen angegeben.

Durch die Trennung oder Entkopplung des Datenbusses in wenigstens zwei Buszweige kann bei einer Störung oder einem Defekt auf einer Busleitung, der Datenaustausch wenigstens auf einem der Buszweige fortgesetzt werden, der keine Störung aufweist. Solche Störungen oder Defekte sind typischerweise das fehlerhafte dauernde Anliegen eines Signalpegels (stuck
at dominante state oder stuck at recessive state) oder das Anliegen eines nicht definierten Signalpegels. Eine solche Störung kann beispielsweise bei einem lokalen Kurzschluss mit Masse oder bei einem Fremdschluss mit einer Energieversorgung auftreten.

In einer besonders bevorzugten Ausführungsform werden getrennte Buszweige wieder miteinander verbunden, wenn die Störung bzw. der Fehler verschwindet oder wenn der Datenbus bei einem neuen Einschalten zurückgesetzt wird. Ein Indiz für das Verschwinden eines Fehlers ist, wenn die Signalpegel auf den Buszweigen wieder vordefinierte Signalpegel erreichen und/oder wenn ein Transceiver der Entkopplungsschaltung in der Lage ist, den Signalpegel des betreffenden Buszweiges innerhalb der vorbestimmten Pegel zu ändern. Alternativ kann ein Zusammenschluss der Buszweige ausschließlich bei einem neuen Einschalten erfolgen.

Vorzugsweise erfolgt der Datenaustausch auf dem Datenbus mit Puls-Kode-modulierten Daten in NRZ (no return to zero) und Bit-Füllung (bit stuffing) zur Unterbrechung langer High- oder Low-Bitfolgen.

Ferner kann der Bitstrom mittels einer selbstsynchronisierenden Kodierung kodiert sein.

Bevorzugtes Anwendungsgebiet der Erfindung sind sicherheitsrelevante Anwendungen in Kraftfahrzeugen ("drive by wire), wie beispielsweise ein Datenbus für eine elektromechanische Bremse ("brake by wire"), eine elektromechanische Lenkung ("steer by wire"), ein elektronisches Gaspedal, etc.

Bei einem elektromechanischen Bremssystem verbindet ein Buszweig vorteilhafterweise zwei Aktoren einer elektromechanischen Bremse. Dadurch können analog einem herkömmlichen hydraulischen Zweikreissystem durch einen intakt gebliebenen Buszweig zwei Räder gebremst werden.

Weitere Merkmale, Vorteile und Anwendungsmöglichkeiten der Erfindung ergeben sich aus der nachfolgenden Beschreibung eines Ausführungsbeispiels in Verbindung mit den Zeichnungen. Es zeigen:
- Figur 1: zwei über eine Entkopplungsschaltung miteinander verbundene Buszweige,
- Figur 2: die Entkopplungsschaltung von Figur 1 und
- Figur 3: einen Teil eines Bussystems eines elektromechanischen Bremssystems.

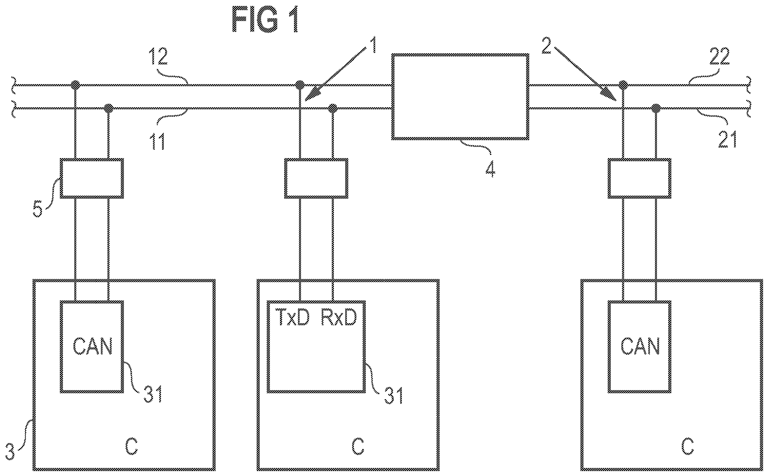

Der in Figur 1 dargestellte Teil eines Datenbusses eines Kraftfahrzeugs weist zwei Buszweige 1 und 2 mit Busleitungen 11, 12 beziehungsweise 21, 22 auf, die durch eine Trenn- oder Entkopplungsschaltung 4 physikalisch voneinander getrennt bzw. entkoppelt sind.

Die Entkopplungsschaltung 4 weist einen ersten Zustand auf, in dem sie eine bidirektionale Kommunikation zwischen den beiden Buszweigen vermittelt und einen Zustand auf, in dem sie die Kommunikation zwischen den beiden Buszweigen 1 und 2 unterbindet.

Eine Vielzahl von Busteilnehmern 3 oder Recheneinheiten sind parallel an die Busleitungen 11, 12 und 21, 22 der beiden Buszweige 1, 2 verbunden. Jeder der beiden Buszweige 1, 2 weist eine Mehrzahl von Teilnehmern 3 auf.

Bei den Teilnehmern 3 handelt es sich um ein Steuersystem das (Mikroprozessor), das Befehle zum Betätigen einer Radbremse erzeugt, und um Steuersystem (Mikroprozessoren), die empfangene Steuerbefehle an Elektromotoren ausgeben, um ein Rad abzubremsen.

Auf den Busleitungen werden Daten übertragen, indem zwischen definierten, differentiellen Signalpegeln für einen dominanten Zustand und für einen rezessiven Zustand gewechselt wird. Der dominante Zustand ist der auf den Busleitungen herrschende Zustand, wenn kein Signal von einem Teilnehmer 3 angelegt ist. Im vorliegenden Fall wird im dominanten Zustand an eine Busleitung eine Spannung von 3,5V und an die andere Busleitung eine Spannung von 1,5 V angelegt. Im rezessiven Zustand sind beide Busleitungen mit 2,5V beaufschlagt. Dies entspricht dem "unbelegten" Zustand. Bei einem gleichzeitigem Auftreten des dominanten Zustands und des rezessiven Zustands "überschreibt" folglich der dominante Zustand den rezessiven Zustand.

Zur Datenübertragung veranlassen die Teilnehmer 3 einen Wechsel zwischen dem dominanten Zustand und dem rezessiven Zustand. Der dominante Zustand kann ein bestimmter Spannungs- oder Strompegel sein, dem der logische Zustand High oder Low zugeordnet ist. Der Pegel wird aus der Differenz zwischen den Pegeln an den beiden Busleitungen 1 und 2 gebildet. Zum Wechseln des logischen Zustands wird der Signalpegel auf beiden Busleitungen 11 und 12 bzw. 21 und 22 gewechselt.

Jeder Teilnehmer 3 ist jeweils über einen Transceiver 5 mit den Busleitungen 11, 12 bzw. 21, 22 verbunden. Die Transceiver 5 wandeln die auf den Busleitungen anliegenden differentiellen Signalpegel in digitale Pegel für die Teilnehmer 3 und die digitalen TTL-Signalpegel der sendenden Teilnehmer 3 in die vordefinierten differentiellen Pegel auf den Busleitungen um.

Das Datenbussystem, einschließlich aller angeschlossenen Bausteine, ist für eine Kommunikation nach einem CAN-Protokoll spezifiziert. Allerdings erfolgt der Datenaustausch mittels eines zeitgesteuerten Protokolls (vorzugsweise TTP oder Flexray), obwohl auch eine Kommunikation in einem ereignisgesteuerten Protokoll möglich ist. Ein Vorteil zeitgesteuerter Datenkommunikation besteht darin, dass periodisch Daten ausgetauscht werden müssen und daher ein Fehler zuverlässig erkannt wird, wenn ein Datenaustausch länger als ein bestimmtes Zeitintervall unterbleibt.

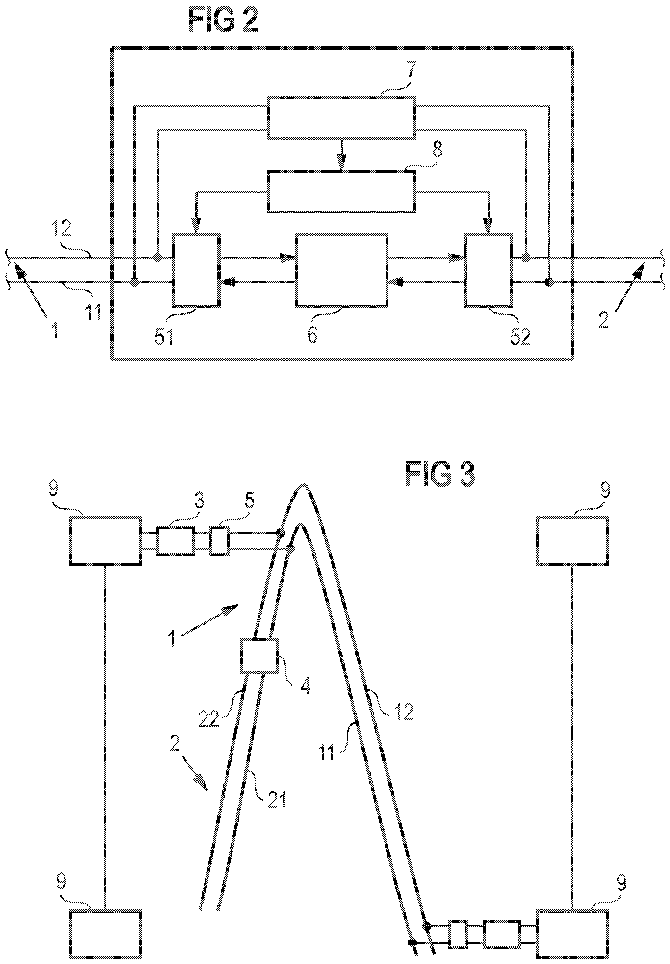

Figur 2 zeigt die Entkopplungsschaltung 4, die zwei Transceiver 51 und 52, eine Datenübergabelogik 6, eine Messeinheit 7 und eine Überwachungseinheit 8 aufweist.

Empfängt einer der Transceiver 51 oder 52 auf den Busleitungen 11, 12 bzw. 21 und 22 eines der Buszweige 1 bzw. 2 mittels differentieller Signalpegel gesendete Daten, so wandelt er diese in herkömmliche digitale Signale um. Diese digitalen Signale werden anschließend von dem zweiten Transceiver des Transceiver-Paares wieder in differentielle Signalpegel umgewandelt und auf die Busleitungen des anderen Buszweigs ausgegeben.

Die bidirektionalen Transceiver 51 und 52 lesen während des Sendens gleichzeitig Daten von den Busleitungen 11 und 12 bzw. 21 und 22 zurück, um die Erkennung eines Fehlerzustands oder eines Datentransfers einer höheren Priorität auf den Busleitungen zu ermöglichen.

Die zwischen den Transceivern 51 und 52 angeordnete Datenübergabelogik 6 hat die Aufgabe zu verhindern, dass ein von einem Transceiver 51, 52 auf die Busleitungen (also die "Analogseite" des Transceivers) eines ersten Buszweigs ausgegebener dominanter Signalpegel wieder zurückgelesen wird (auf die "Digitalseite" des Transceivers) und vom zweiten Transceiver auf die Busleitungen des zweiten Buszweigs ausgegeben wird. Denn auf diese Weise würde dauerhaft der dominante Signalpegel auf den Busleitungen 11, 12 und 21, 22 beider Buszweige 1, 2 eingestellt. Eine Kommunikation von Daten wäre dann nicht mehr möglich. Die Datenübergabelogik gewährleistet somit ein transparentes Verhalten der beiden an die Entkopplungsschaltung 4 angeschlossenen Buszweige 1 und 2.

Die Datenübergabelogik 6 kann beispielsweise mit einfachen digitalen Logikbausteinen oder mit einem einfachen Mikroprozessor realisiert werden, der durch eine kleines Programm entsprechend gesteuert wird. Die Laufzeit eines von einem Buszweig empfangenen Signals oder Datums durch die Entkopplungsschaltung 4 sollte höchstens der halben Dauer des durch den Systemtakt des Datenbusses definierten Buszyklus betragen. Vorzugsweise beträgt die Laufzeit höchstens ein Drittel des Buszyklus.

Die Überwachungseinheit 8 überwacht permanent die Signalpegel, die auf den Busleitungen 11, 12, 21, 22 beider Buszweige anliegen. Hierdurch kann die Überwachungseinheit 8 einen fehlerhafter Weise andauernden dominanten Zustand erkennen, der im folgenden mit SADS (stuck at dominant state) bezeichnet wird. Ein SADS-Fehler liegt vor, wenn durch einen defekten Busteilnehmer oder einem elektrischen Kontakt zwischen einer Energieversorgungsleitung und einer Busleitung (Fremdschluss) der dominante Zustand länger als ein definiertes Zeitintervall anliegt. Das Zeitintervall wird dabei in Abhängigkeit von der Kodierung bestimmt.

Über die Messeinheit 7 kann die Überwachungseinheit 8 ferner einen fehlerhafterweise andauernden rezessiven Zustand erkennen, der im folgenden mit SARS (stuck at recessive state) bezeichnet wird. Ein SARS-Fehler tritt auf, wenn infolge eines Fremdschlusses oder eines Kurzschlusses der dominante Zustand nicht mehr eingestellt werden kann. Dieser Fehler wird durch eine Widerstandsmessung erkannt. Der Widerstand zwischen den beiden Busleitungen 11 und 12 bzw. 21 und 22 ist durch deren nicht dargestellte Abschlusswiderstände vorgegeben. Die Widerstandsmessung darf die Kommunikation auf den Busleitungen nicht beeinträchtigen. Dies wird durch eine in der Figur ebenfalls nicht dargestellte bekannte Dioden-Widerstands-schaltung gewährleistet.

Wurde eine Störung oder ein Defekt (SADS- oder SARS-Fehler) von der Überwachungseinheit 8 detektiert, so trennt oder entkoppelt sie die beiden Buszweige 1 und 2 mittels eines oder beider Transceiver 51, 52. Hierzu wird lediglich der Enable-Eingang des betreffenden Transceivers ausgeschaltet. Eine Kommunikation von Daten zwischen den beiden Buszweigen 1 und 2 ist dann nicht mehr möglich.

Da ein einzelner Fehler nur einen der Buszweige 1 oder 2 betreffen kann, ist es möglich, den Datenaustausch auf dem anderen, intakten Buszweig aufrecht zu erhalten. Dies ist besonders dann sinnvoll, wenn ein Teilnehmer oder eine Steuereinheit, die an die Busleitungen angeschlossene Aktoren steuert, entweder für jeden Buszweig redundant ausgeführt ist oder separate Verbindungen zu den Buszweigen aufweist.

Nach dem Trennen des Datenbusses wird die Überwachung durch die Überwachungseinheit 8 fortgesetzt. Wird festgestellt, dass kein SADS- oder SARS- Fehler mehr vorliegt bzw. kein unzulässiges Potential mehr an den Busleitungen anliegt, so werden die Buszweige 1 und 2 wird die Entkopplungsschaltung 4 wieder in den Zustand gesetzt, in dem sie Daten zwischen den beiden Buszweigen 1 und 2 austauscht.

Zusätzlich erfolgt ein Zusammenschalten der Buszweige 1 und 2 bei einem Rücksetzen des Systems infolge eines Abschaltens und neuen Einschaltens des Systems (power-on reset) .

Figur 3 veranschaulicht ein elektromechanisches Bremssystem mit dem in den obigen Figuren erläuterten Datenbus. Über einen der nur teilweise dargestellten Buszweige 1 oder 2 sind jeweils zwei Aktoren (Elektromotoren) 9 einer elektromechanischen Bremse mittels der diesen zugeordneten Busteilnehmer 3 oder Steuereinheiten steuerbar. Die durch einen Buszweig verbundenen Aktoren 9 sind diagonal an unterschiedlichen Fahrzeugachsen angeordnet.

## Patentansprüche

1. Verfahren zum Datenaustausch auf einem Datenbus, wobei
- Daten zwischen Teilnehmern (3) ausgetauscht werden, die an wenigstens zwei unterschiedlichen Buszweigen (1; 2) angeschlossen sind, die durch zwei Transceiver (51; 52) einer Entkopplungsschaltung (4) voneinander entkoppelt sind,
- die zwei Buszweige (1; 2) voneinander getrennt werden, wenn auf einem der Buszweige eine Störung erkannt wird, und der Datenaustausch in wenigstens einem der Buszweige (1; 2) fortgesetzt wird, der nicht von der Störung betroffen ist, wobei die getrennten Buszweige (1; 2) wieder miteinander verbunden werden, wenn die Energieversorgung des Datenbusses neu eingeschaltet wird und auf den Buszweigen (1; 2) Daten erzeugt werden, indem zwischen einem dominanten und einem rezessiven Pegel auf wenigstens einer Busleitung (11; 12; 21; 22) gewechselt wird, und jeder der Transceiver (51; 52) jeweils die von ihm auf die wenigstens eine Busleitung (11; 12; 21; 22) eines Buszweigs (1; 2) ausgegebenen Daten in Richtung des anderen Buszweigs (1; 2) zurück überträgt, um eine Überprüfung des vom Transceiver (51; 52) auf der wenigstens einen Busleitung (11; 12; 21; 22) erzeugten Signalpegels zu ermöglichen, wobei die Rückübertragung auf den anderen Buszweig (1; 2) jedenfalls dann verhindert wird, wenn der Transceiver mit dem dominanten Signalpegel auf die wenigstens eine Busleitung (11; 12; 13; 14) Daten ausgibt.

2. Verfahren nach dem vorhergehenden Anspruch, **dadurch gekennzeichnet, dass** eine Störung erkannt wird, wenn der Signalpegel für den dominanten Zustand an der Busleitung (1; 2) länger als ein vorbestimmtes Zeitintervall anliegt.

3. Verfahren nach einem der vorhergehenden Ansprüche, **dadurch gekennzeichnet, dass** die Buszweige (1; 2) voneinander getrennt werden, wenn auf der Busleitung ein Kurzschluss oder ein Fremdschluss vorliegt.

4. Verfahren nach einem der vorhergehenden Ansprüche, **dadurch gekennzeichnet, dass** die Daten auf den Buszweigen (1; 2) in einem zeitgesteuerten Protokoll ausgetauscht werden.

5. Verfahren nach einem der vorhergehenden Ansprüche, **dadurch gekennzeichnet, dass** der Bitstrom durch NRZ und Bit-Stuffing kodiert ist.

6. Verfahren nach einem der vorhergehenden Ansprüche, **dadurch gekennzeichnet, dass** der Bitstrom mittels einer selbstsynchronisierenden Kodierung kodiert ist.

7. Verfahren nach einem der vorhergehenden Ansprüche, **dadurch gekennzeichnet, dass** die Signalpegel der Busleitungen (11; 12; 21; 22) der getrennten Buszweige (1; 2) überwacht werden, und dass die Buszweige (1; 2) wieder miteinander verbunden werden, wenn die Störung verschwunden ist.

8. Verfahren nach einem der vorhergehenden Ansprüche, **dadurch gekennzeichnet, dass** die Daten auf den Busleitungen (11; 12; 21; 22) der wenigstens zwei Buszweige (1; 2) mittels differentiellen Signalpegeln ausgetauscht werden, und dass die Übertragung der Daten zwischen den Buszweigen (1; 2) mittels digitaler Signalpegel erfolgt.

9. Datenbus zur Verbindung von Busteilnehmern, der aufweist:
- zwei voneinander physikalisch entkoppelte Buszweige (1; 2) mit wenigstens je einer Busleitung (11; 12; 21; 22),
- eine Entkopplungsschaltung (4), die Daten bidirektional von einem Bus zweig (1; 2) an den anderen Buszweig (1; 2) übermittelt und die Buszweige (1; 2) voneinander trennt, wenn eine Störung erkannt ist,
- zwei in der Entkopplungsschaltung (4) enthaltene Transceiver (51; 52), die jeweils Daten auf einen der beiden Buszweige (1; 2) ausgeben,
wobei der Datenbus derart ausgebildet ist, um
- die getrennten Buszweige (1; 2) wieder miteinander zu verbinden, wenn die Energieversorgung des Datenbusses neu eingeschaltet wird und der Datenbus derart ausgebildet ist, dass
- auf den Buszweigen (1; 2) Daten erzeugt werden, indem zwischen einem dominanten und einem rezessiven Pegel auf wenigstens einer Busleitung (11; 12; 21; 22) gewechselt wird, und jeder der Transceiver (51; 52) jeweils die von ihm auf die wenigstens eine Busleitung (11; 12; 21; 22) eines Buszweigs (1; 2) ausgegebenen Daten in Richtung des anderen Buszweigs (1; 2) zurück überträgt, um eine Überprüfung des vom Transceiver (51; 52) auf der wenigstens einen Busleitung (11; 12; 21; 22) erzeugten Signalpegels zu ermöglichen, wobei die Rückübertragung auf den anderen Buszweig (1; 2) jedenfalls dann verhindert wird, wenn der Transceiver mit dem dominanten Signalpegel auf die wenigstens eine Busleitung (11; 12; 13; 14) Daten ausgibt.

10. Datenbus nach dem vorhergehenden Anspruch, **dadurch gekennzeichnet, dass** die Buszweige (1; 2) miteinander über die Entkopplungsschaltung (4) entkoppelte CAN-Busse sind und die Transceiver (51; 52) CAN-Transceiver sind.

11. Datenbus nach einem der vorhergehenden, auf einen Datenbus gerichteten Ansprüche, **dadurch gekennzeichnet, dass** eine Messeinheit (7) zur Detektion eines Kurzschlusses oder eines Fremdschlusses vorgesehen ist.

12. Datenbus nach einem der vorhergehenden auf einen Datenbus gerichteten Ansprüche, **dadurch gekennzeichnet, dass** ein Buszweig (1; 2) zwei Aktoren einer elektromechanischen Bremse verbindet, die diagonal an unterschiedlichen Fahrzeugachsen angeordnet sind.

## Claims

1. Method for interchanging data on a data bus, wherein
- data are interchanged between subscribers (3) connected to at least two different bus branches (1; 2) which are decoupled from one another by means of two transceivers (51; 52) of a decoupling circuit (4),
- the two bus branches (1; 2) are disconnected from one another if a fault is detected on one of the bus branches, and the interchange of data is continued in at least one of the bus branches (1; 2) which is not affected by the fault, wherein the disconnected bus branches (1; 2) are connected to one another again if the energy supply for the data bus is switched on again, and data are produced on the bus branches (1; 2) by changing between a dominant level and a recessive level on at least one bus line (11; 12; 21; 22), and each of the transceivers (51; 52) respectively transmits the data output by it onto the at least one bus line (11; 12; 21; 22) of a bus branch (1; 2) back in the direction of the other bus branch (1; 2) in order to make it possible to check the signal level produced by the transceiver (51; 52) on the at least one bus line (11; 12; 21; 22), wherein the transmission back to the other bus branch (1; 2) is prevented in any case when the transceiver with the dominant signal level outputs data onto the at least one bus line (11; 12; 13; 14).

2. Method according to the preceding claim, **characterized in that** a fault is detected if the signal level for the dominant state is present on the bus line (1; 2) for longer than a predetermined interval of time.

3. Method according to one of the preceding claims, **characterized in that** the bus branches (1; 2) are disconnected from one another if a short circuit or an external short circuit is present on the bus line.

4. Method according to one of the preceding claims, **characterized in that** the data are interchanged on the bus branches (1; 2) in a time-controlled protocol.

5. Method according to one of the preceding claims, **characterized in that** the bit stream is coded by means of NRZ and bit stuffing.

6. Method according to one of the preceding claims, **characterized in that** the bit stream is coded by means of self-synchronizing coding.

7. Method according to one of the preceding claims, **characterized in that** the signal levels of the bus lines (11; 12; 21; 22) of the disconnected bus branches (1; 2) are monitored, and **in that** the bus branches (1; 2) are connected to one another again if the fault has disappeared.

8. Method according to one of the preceding claims, **characterized in that** the data are interchanged on the bus lines (11; 12; 21; 22) of the at least two bus branches (1; 2) by means of differential signal levels, and **in that** the data are transmitted between the bus branches (1; 2) by means of digital signal levels.

9. Data bus for connecting bus subscribers, having:
- two bus branches (1; 2) which are physically decoupled from one another and each have at least one bus line (11; 12; 21; 22),
- a decoupling circuit (4) which transmits data in a bidirectional manner from one bus branch (1; 2) to the other bus branch (1; 2) and disconnects the bus branches (1; 2) from one another when a fault is detected,
- two transceivers (51; 52) which are included in the decoupling circuit (4) and each output data onto one of the two bus branches (1; 2),
wherein the data bus is designed
- to connect the disconnected bus branches (1; 2) to one another again when the energy supply for the data bus is switched on again,
and the data bus is designed in such a manner that
- data are produced on the bus branches (1; 2) by changing between a dominant level and a recessive level on at least one bus line (11; 12; 21; 22), and each of the transceivers (51; 52) respectively transmits the data output by it onto the at least one bus line (11; 12; 21; 22) of a bus branch (1; 2) back in the direction of the other bus branch (1; 2) in order to make it possible to check the signal level produced by the transceiver (51; 52) on the at least one bus line (11; 12; 21; 22), wherein the transmission back to the other bus branch (1; 2) is prevented in any case when the transceiver with the dominant signal level outputs data onto the at least one bus line (11; 12; 13; 14).

10. Data bus according to the preceding claim, **characterized in that** the bus branches (1; 2) are CAN buses decoupled via the decoupling circuit (4) and the transceivers (51; 52) are CAN transceivers.

11. Data bus according to one of the preceding claims directed to a data bus, **characterized in that** a measuring unit (7) for detecting a short circuit or an external short circuit is provided.

12. Data bus according to one of the preceding claims directed to a data bus, **characterized in that** a bus branch (1; 2) connects two actuators of an electromechanical brake which are diagonally arranged on different vehicle axles.

## Revendications

1. Procédé d'échange de données sur un bus de données,
- des données étant échangées entre des périphériques (3) qui sont connectés à au moins deux branches de bus (1 ; 2) différentes, lesquelles sont découplées l'une de l'autre par deux émetteurs-récepteurs (51; 52) d'un circuit de découplage,
- les deux branches de bus (1 ; 2) étant déconnectées l'une de l'autre lorsqu'une perturbation est détectée sur l'une des branches de bus et l'échange de données se poursuivant dans au moins l'une des branches de bus (1 ; 2) qui n'est pas concernée par la perturbation, les branches de bus (1 ; 2) déconnectées étant reconnectées l'une à l'autre lorsque l'alimentation en énergie du bus de données est remise en circuit et des données sont générées sur les branches de bus (1 ; 2) par une alternance entre un niveau dominant et un niveau récessif sur au moins une ligne de bus (11 ; 12 ; 21 ; 22), et chacun des émetteurs-récepteurs (51 ; 52) transmettant respectivement les données délivrées par lui sur l'au moins une ligne de bus (11 ; 12 ; 21 ; 22) d'une branche de bus (1 ; 2) en retour en direction de l'autre branche de bus (1 ; 2) afin de permettre un contrôle du niveau de signal généré par l'émetteur-récepteur (51 ; 52) sur l'au moins une ligne de bus (11 ; 12 ; 21 ; 22), la transmission en retour sur l'autre branche de bus (1 ; 2) étant dans tous les cas empêchée lorsque l'émetteur-récepteur délivre des données sur l'au moins une ligne de bus (11 ; 12 ; 21 ; 22) avec le niveau de signal dominant.

2. Procédé selon la revendication précédente, **caractérisé en ce qu'**une perturbation est reconnue lorsque le niveau de signal pour l'état dominant est appliqué à la ligne de bus (1 ; 2) pendant plus longtemps qu'un intervalle de temps prédéterminé.

3. Procédé selon l'une des revendications précédentes, **caractérisé en ce que** les branches de bus (1 ; 2) sont déconnectées l'une de l'autre lorsqu'un court-circuit ou une dérivation parasite est présent sur la ligne de bus.

4. Procédé selon l'une des revendications précédentes, **caractérisé en ce que** les données sur les branches de bus (1 ; 2) sont échangées dans un protocole commandé dans le temps.

5. Procédé selon l'une des revendications précédentes, **caractérisé en ce que** le flux binaire est codé par NRZ et bourrage de bits.

6. Procédé selon l'une des revendications précédentes, **caractérisé en ce que** le flux binaire est codé au moyen d'un codage à auto-synchronisation.

7. Procédé selon l'une des revendications précédentes, **caractérisé en ce que** les niveaux de signal des lignes de bus (11 ; 12 ; 21 ; 22) des branches de bus (1 ; 2) déconnectées sont surveillés et **en ce que** les branches de bus (1 ; 2) sont reconnectées l'une à l'autre lorsque la perturbation a disparu.

8. Procédé selon l'une des revendications précédentes, **caractérisé en ce que** les données sur les lignes de bus (11 ; 12 ; 21 ; 22) sont échangées au moyen de niveaux de signal différentiels et **en ce que** la transmission de données entre les branches de bus (1 ; 2) s'effectue au moyen de niveaux de signal numériques.

9. Bus de données destiné à connecter des périphériques de bus, comprenant :
- deux branches de bus (1 ; 2) découplées physiquement l'une de l'autre comprenant chacune au moins une ligne de bus (11 ; 12 ; 21 ; 22),
- un circuit de découplage (4) qui communique des données de manière bidirectionnelle d'une branche de bus (1 ; 2) à l'autre branche de bus (1 ; 2) et déconnecte les branches de bus (1 ; 2) l'une de l'autre lorsqu'une perturbation est reconnue,
- deux émetteurs-récepteurs (51 ; 52) inclus dans le circuit de découplage (4), lesquels délivrent respectivement des données sur l'une des deux branches de bus (1 ; 2),
le bus de données étant configuré pour
- reconnecter l'une à l'autre les branches de bus (1 ; 2) déconnectées lorsque l'alimentation en énergie du bus de données est remise en circuit
et le bus de donnés étant configuré de telle sorte que
- des données sont générées sur les branches de bus (1 ; 2) par une alternance entre un niveau dominant et un niveau récessif sur au moins une ligne de bus (11 ; 12 ; 21 ; 22), et chacun des émetteurs-récepteurs (51 ; 52) transmet respectivement les données délivrées par lui sur l'au moins une ligne de bus (11 ; 12 ; 21 ; 22) d'une branche de bus (1 ; 2) en retour en direction de l'autre branche de bus (1 ; 2) afin de permettre un contrôle du niveau de signal généré par l'émetteur-récepteur (51 ; 52) sur l'au moins une ligne de bus (11 ; 12 ; 21 ; 22), la transmission en retour sur l'autre branche de bus (1 ; 2) étant dans tous les cas empêchée lorsque l'émetteur-récepteur délivre des données sur l'au moins une ligne de bus (11 ; 12 ; 21 ; 22) avec le niveau de signal dominant.

10. Bus de données selon la revendication précédente, **caractérisé en ce que** les branches de bus (1 ; 2) sont des bus CAN découplés l'un de l'autre par le biais du circuit de découplage (4) et les émetteurs-récepteurs (51 ; 52) sont des émetteurs-récepteurs CAN.

11. Bus de données selon l'une des revendications précédentes, orientées sur un bus de données, **caractérisé par** la présence d'une unité de mesure (7) destinée à la détection d'un court-circuit ou d'une dérivation parasite.

12. Bus de données selon l'une des revendications précédentes, orientées sur un bus de données, caractérisé en qu'une branche de bus (1 ; 2) relie deux actionneurs d'un frein électromécanique qui sont disposés diagonalement sur des essieux de véhicule différents.
